# EUROPEAN PATENT APPLICATION

(11) **EP 2 641 826 A1**
(43) Date of publication of application: **25.09.2013**
(21) Application number: 12305330.8
(22) Date of filing: 21.03.2012
(51) Int. Cl.: B63B 59/02

(54) **An assembly for attachment to a support part and a watercraft comprising such assembly**

(71) Applicant: Plastimo Marine Italia S.p.A., 16012 Busalla (IT)
(72) Inventor: Bortolotti, Vanes, 40033 CASALECCHIO DI RENO (IT)
(74) Representative: Jacobson, Claude

(57) **Abstract**

The present invention concerns an assembly (14) for attachment to a support part (12), the assembly (14) comprising:
- an inner member (18) in particular a rotationally symmetrical cylindrical pivot, provided with:
- a main body (26) extending between a first end (30) and a second end (28), the first end (30) enabling attachment of the inner member (18) to said support part, and
- at least one retaining element (32, 40) protruding from the main body (26); and

- an outer member (16) in an elastic material adapted to be fitted on the inner member (18), said outer member (16) having recess (25) therein, the recess (25) having a shape complementary to an outer shape of said inner member (18) at least when the outer member (16) is fitted on the inner member (18).

## Description

The present invention relates to an assembly for attachment to a support part, in particular to a boat dock bumper or a dock. The invention also concerns a watercraft comprising such assembly.

The growth in popularity over the last decades of recreational boating has been accompanied by the design, production and sale of countless accessories to enhance the appearance, improve the performance and increase the useful life of the wide variety of watercraft available to the public.

One of these accessories is a boat bumper or boat fender. Its purpose is to protect the hull and gunwale of any kind of watercraft from being damaged when moored to a dock, pier, piling or similar structure. Secondarily, the boat bumper protects the dock or pier from being damaged by the moored watercraft.

However, watercraft anchored to any kind of dock or pier does not remain stationary but floats up and down and back and forth in the water while banging, bumping, and rubbing up against the adjacent dock or pier. As the frequency and amplitude of the waves increases, the pitching and rolling of the watercraft intensifies, and, thus, the likelihood of the watercraft being damaged by banging against the dock is increased.

Therefore, to protect both watercraft and the dock from being damaged, a wide variety of boat bumpers have been designed and sold as a necessary accessory.

It is desirable that the boat dock bumper be firmly attached to the watercraft or to the dock.

It is known to use glue for such attachment. However, such solution is polluting and does not ensure a good holding of the bumper on the watercraft.

Another prior art solution is to screw the bumper to a part of the watercraft, such as the gunwale. In this case, the bumper is provided with a hole through which a visible screw can pass.

However, upon applying a force to the bumper, the generation of stress in the fixing area can cause breakage of the bumper, resulting in most cases in a loss of the bumper.

One object of the invention is to alleviate at least partly the above-mentioned drawbacks. More particularly, embodiments of the invention aim at ensuring a most secure mechanical fastening.

This object is achieved by an assembly for attachment to a support part, the assembly comprising an inner member, in particular a rotationally symmetrical cylindrical pivot, provided with a main body extending between a first end and a second end, the first end enabling attachment of the inner member to said support part, and at least one retaining element protruding from the main body. The assembly further comprises an outer member in an elastic material adapted to be fitted on the inner member, said outer member having recess therein, the recess having a shape complementary to an outer shape of said inner member at least when the outer member is fitted on the inner member.

Preferred embodiments comprise one or more of the following features:
- the inner member is made of a material more rigid than the outer member.
- the material of the outer member element is selected in the group consisting of polyurethane, polyvinyl chloride, ethylene vinyl acetate, silicone and thermoplastic elastomer.
- the retaining element comprises a retaining ring.
- the inner member is provided with a mushroom head at the second end.
- the inner member further comprises a through hole with a shoulder and a screw with a screw head for attachment of the inner member to said support part. The screw and the through hole are arranged so that the screw protrudes from the main body of the shoulder when the screw head is in abutment against the shoulder.
- the recess is provided with a chamfer at its entry.
- the recess is a blind hole.
- the assembly is a boat dock bumper for attachment to a dock or a watercraft, the outer member is a bumping member and the inner member is a fastener.

The invention also provides a watercraft comprising a gunwale and an assembly as defined hereabove, the assembly being attached to the gunwale through the fastener.

Further features and advantages of the invention will appear from the following description provided as non-limiting examples, with reference to the accompanying drawings in which:
- Figure 1 shows a part of a watercraft, and
- Figure 2 shows a schematic view of a cross-section along an axis A-A of Figure 1.

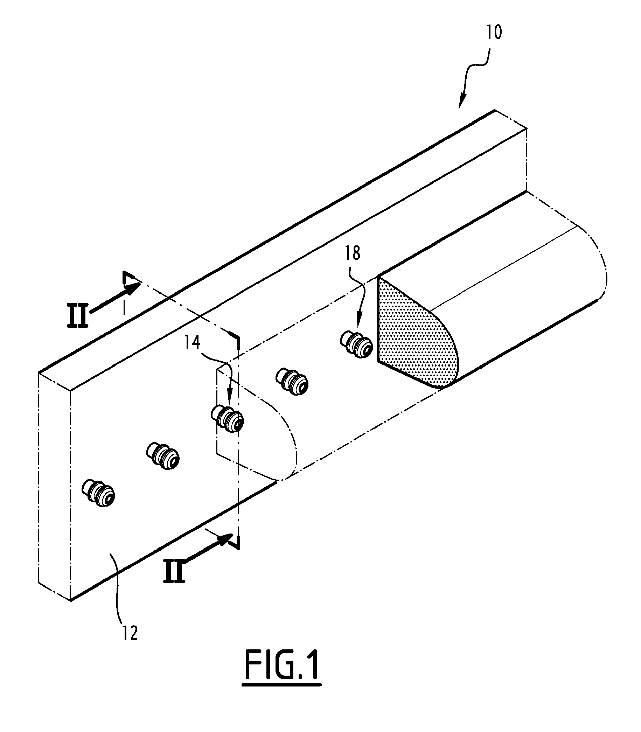

Figure 1 represents a part of a watercraft 10. Watercraft 10 comprises a gunwale 12. As explained before, gunwale 12 should be protected against collisions with a dock, for instance.

Watercraft 10 further comprises several identical assemblies 14 which are aligned along a substantially horizontal line and attached to gunwale 12. Only one assembly 14 is fully represented on Figure 1. In the example illustrated, the assembly is a boat dock bumper 14.

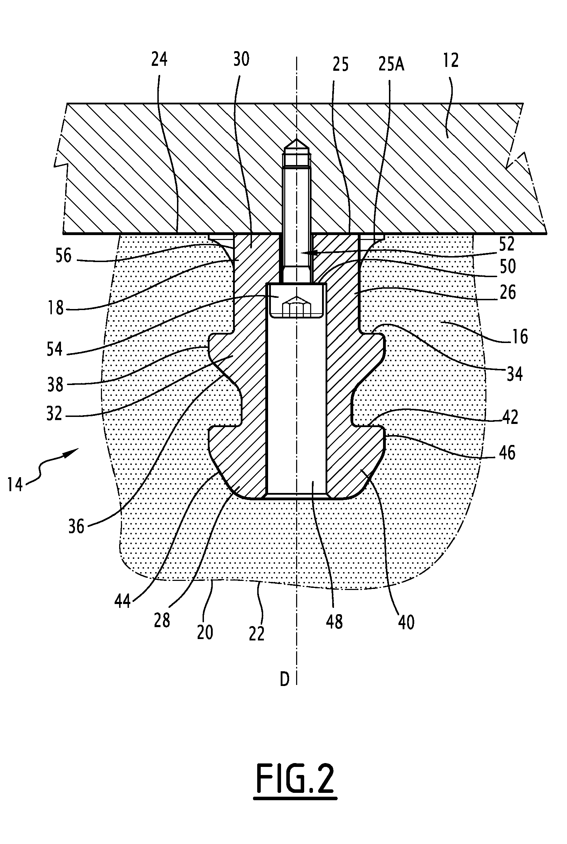

Figure 2 is a meridian cross-section along axis A-A of Figure 1. A part of gunwale 12 is represented on Figure 2. With relation to gunwale 12, for each element described, the back part is defined as the part of the element which is the closest to gunwale 12, by opposition to the front part which is defined as the farthest one.

Bumper 14 is further illustrated on Figure 2. Bumper 14 comprises an outer element 16 and an inner element 18. According to the example of Figure 2, outer element 16 is a bumping element and inner element 18 is a fastener.

Bumping element 16 is meant to protect gunwale 12 from being damaged when moored to a dock or a pier. Secondarily, bumping element 16 protects the dock or pier from being damaged by the moored watercraft 10.

Therefore, so as to absorb any impact, bumping element 16 is in an elastic material. For instance, bumping element 16 is made of polyurethane, ethylene vinyl acetate, polyvinyl chloride (commonly abbreviated PVC), silicone or any thermoplastic elastomer (TPE).

According to the specific example of Figure 1, externally, bumping element 16 has a substantially cylindrical peripheral surface 20, a substantially flat front surface 22 and a flat annular back surface 24. Front surface 22 is the surface of bumping element 16 which comes into contact with docks or piers.

In addition, bumping element 16 has portions defining a blind hole 25. Such blind hole 25 opens on back surface 24. The shape of blind hole 25 is complementary to the outer shape of fastener 18 when element 16 is at rest, i.e. before its mounting onto fastener 18. Bumping element 16 has thus a female shape with relation to fastener 18.

At its entry, hole 25 is provided with a chamfer 25A for facilitating the insertion of fastener 18 in bumping element 16. Chamfer 25A forms an acute angle with respect to the central axis of hole 25. Preferably the value of such angle is between 30° and 45°.

In some embodiments, bumping element 16 is, therefore, obtained by molding of a female accommodation shape complementary to fastener 18.

Fastener 18 is made of a material more rigid than the material of the bumping element 16. As illustration, fastener 18 is made of stainless stell, plastic, aluminum, bronze, wood or a composite material.

Fastener 18 comprises a main body 26 extending between a front end 28 and a back end 30.

In the example proposed, main body 24 has a generally cylindrical shape, so that fastener 18 is a cylindrical pivot.

Fastener 18 has thus a longitudinal axis D of symmetry which extends from front end 18 to back end 22. This axis is perpendicular to the portion of gunwale 12 represented on Figure 2.

According to the example of Figure 2, fastener 18 is also provided with an intermediate retaining ring 32 protruding from main body 26.

Intermediate retaining ring 32 has a planar rear shoulder 34. Intermediate retaining rings 32 is therefore meant to ensure a secure mechanical fastening of bumper 14.

In addition, to make the assembly of the bumper 14 easier, intermediate retaining ring 32 has a front chamfer 36. Chamfer 36 forms an acute angle with respect to axis D. Preferably the value of such angle is between 30° and 45°. A cylindrical surface 38 extends from shoulder 34 to chamfer 36.

Similarly, a front retaining ring 40 protrudes from main body 26. Retaining ring 40 also has a planar rear shoulder 42 and a front chamfer 44. In addition, as for intermediate retaining ring 32, a cylindrical surface 46 extends from shoulder 42 to chamfer 44.

Such retaining ring 40 forms a head of fastener 18 having a mushroom shape.

Fastener 18 further comprises a through hole 48 with a shoulder 50 near its back end 30. The shoulder 32 is internal to main body 26.

Fastener 18 is provided with a screw 52 for attachment of fastener 18 to gunwale 12.

Screw 52 and through hole 48 are arranged so that screw 52 protrudes from main body 26 when the screw head 54 is in abutment against shoulder 50.

To attach bumping element 16, fastener 18 is first screwed to gunwale 12 via screw 52. Fastener 18 is then ready to receive bumping element 16.

Bumping element 16 is then inserted on fastener 18 by taking advantage of the elastic material of bumping element 16. During the phase of insertion, bumping element 16 is temporarily deformed. Such dilatation stops once bumping element 16 is fully inserted, with its back surface 24 abutting gunwale 12. In the inserted phase, indeed, bumping element 16 internally mates the outer shape of fastener 18 due to the elastic memory of its material.

The insertion is facilitated by the fact that the shapes of the hole 25 and the shape of fastener 18 are complementary.

The specific form of fastener 18 facilitates the insertion. In particular, chamfers 44 and 36 successively co-operating with chamfer 25A facilitate the introduction of fastener 18 in bumping element 16.

The presence of retaining shoulders 34, 42 ensures that once inserted, fastener 18 is prevented from getting away from blind hole 25 of bumper element 16, thus ensuring a secure mechanical fastening of bumper 14.

The rotationally symmetrical shape of fastener 18 also contributes to a better holding of fastener 18 in bumping element 16.

Such boat dock bumper 14 thus enables to fasten a bumping element 16 in a fast and secure way.

According to the example illustrated, fastener 18 has two retaining rings 32, 40 but, in other embodiments, it may be provided with one or multiple retaining rings.

Also, the bumper may be attached to a dock or pontoon or pier.

The proposed bumper may also be used in the installation of cushion on hard seating elements on board for a boat.

## Claims

1. An assembly (14) for attachment to a support part (12), the assembly (14) comprising:
- an inner member (18) in particular a rotationally symmetrical cylindrical pivot, provided with:
- a main body (26) extending between a first end (30) and a second end (28), the first end (30) enabling attachment of the inner member (18) to said support part (12), and
- at least one retaining element (32, 40) protruding from the main body (26);
and
- an outer member (16) in an elastic material adapted to be fitted on the inner member (18), said outer member (16) having recess (25) therein, the recess (25) having a shape complementary to an outer shape of said inner member (18) at least when the outer member (16) is fitted on the inner member (18).

2. The assembly according to claim 1, wherein the inner member (18) is made of a material more rigid than the outer member (16).

3. The assembly according to claim 1 or 2, wherein the material of the outer member element (16) is selected in the group consisting of polyurethane, polyvinyl chloride, ethylene vinyl acetate, silicone and thermoplastic elastomer.

4. The assembly according to any one of claims 1 to 3, wherein the retaining element (32, 40) comprises a retaining ring.

5. The assembly according to any one of claims 1 to 4, wherein the inner member (18) is provided with a mushroom head at the second end (28).

6. The assembly according to according to any one of claims 1 to 5, wherein the inner member (18) further comprises:
- a through hole (48) with a shoulder (50),
- a screw (52) with a screw head (54) for attachment of the inner member (18) to said support part (12),
the screw (52) and the through hole (48) being arranged so that the screw (48) protrudes from the main body (26) of the shoulder (50) when the screw head (54) is in abutment against the shoulder (50).

7. The assembly according to according to any one of claims 1 to 6, wherein the recess (25) is provided with a chamfer (25A) at its entry.

8. The assembly according to any one of claims 1 to 7, wherein the recess (25) is a blind hole.

9. The assembly according to any one of claims 1 to 8, wherein the assembly is a boat dock bumper (14) for attachment to a dock or a watercraft (10), the outer member is a bumping member (16) and the inner member is a fastener (18).

10. A watercraft (10) comprising:
- a gunwale (12), and
- an assembly (14) according to claim 9. the assembly (14) being attached to the gunwale (12) through the fastener (18).
